# EUROPÄISCHE PATENTSCHRIFT

(11) **EP 3 439 787 B1**
(45) Veröffentlichungstag und Bekanntmachung des Hinweises auf die Patenterteilung: **12.10.2022**
(21) Anmeldenummer: 17711148.1
(22) Anmeldetag: 16.03.2017
(51) Int. Cl.: B02C 21/02, B02C 23/02

(54) **EINFÜLLTRICHTER**
HOPPER
TRÉMIE DE REMPLISSAGE

(30) Priorität: 07.04.2016 DE 102016106349
(43) Veröffentlichungstag der Anmeldung: 13.02.2019
(73) Patentinhaber: Kleemann GmbH, 73037 Göppingen (DE)
(72) Erfinder: BURGART, Elena, 72622 Nuertingen (DE); KNOBLICH, Christian, 70178 Stuttgart (DE); KOEPF, Reiner, 73333 Gingen an der Fils (DE)
(74) Vertreter: Herrmann, Jochen
(86) Internationale Anmeldenummer: PCT/EP2017/056196
(87) Internationale Veröffentlichungsnummer: WO 2017/174315

(56) Entgegenhaltungen:
- EP-A2- 2 664 492
- WO-A1-2013/068589
- US-A1- 2008 041 984

## Beschreibung

Die Erfindung betrifft einen Einfülltrichter, insbesondere für eine Gesteins-Zerkleinerungsanlage, Siebanlage oder dergleichen, mit einer Seitenwand, die den Trichterraum begrenzt, wobei an die Seitenwand eine Wanderweiterung schwenkbar angekoppelt ist, wobei der Wanderweiterung eine Aufrichthilfe zugeordnet ist, um die Wanderweiterung zwischen einer abgeklappten Transportstellung in eine aufgerichtete Arbeitsstellung zu bewegen, und wobei die Aufrichthilfe einen Aktuator aufweist, der an einen schwenkbar gelagerten Hebel angekoppelt ist.

Aus der EP 2 730 459 A2 ist eine Gesteins-Zerkleinerungsanlage mit einem Einfülltrichter bekannt. Solche Einfülltrichter werden in Zerkleinerungsanlagen, beispielsweise Rotationsprallbrechern, Backenbrechern, Kegelbrecher oder auch in Siebanlagen eingesetzt. Dem Einfülltrichter ist im Bereich der Unterseite des Trichterraums eine Transporteinrichtung, beispielsweise eine Förderinne oder ein Förderband zugeordnet. Über den Einfülltrichter kann das zu zerkleinernde Material eingefüllt und auf die Transportvorrichtung aufgegeben werden. Üblicherweise werden die Einfülltrichter mit Baggern, Radladern oder Zerkleinerungs- oder Siebanlagen beschickt. Die Bauhöhe der Gesteins-Zerkleinerungsanlage muss so dimensioniert sein, dass sie mit Tiefladern transportierbar sind. Mittels der abklappbaren Wanderweiterungen lässt sich die Bauhöhe der Maschine reduzieren.

Die Aufrichthilfe wird zum Zwecke der Arbeitserleichterung eingesetzt, damit der Maschinenumbau einfach zu bewerkstelligen ist. Bei der Aufrichthilfe gemäß der EP 2 730 459 A1 wird der Trichterraum von zwei Seitenwänden begrenzt, an die über ein erstes Schwenklager eine Wanderweiterung anscharniert ist. Die Aufrichthilfe weist als Aktuator einen Hydraulikzylinder auf, der schwenkbar an die Seitenwand angekoppelt ist. Weiterhin ist eine Stütze verwendet, die ebenfalls an die Seitenwand schwenkbar angeschlossen ist. Die Stütze ihrerseits ist über ein zweites Schwenklager schwenkbar mit einem Hebel verbunden. Der Hebel ist schwenkbar an die Wanderweiterung angekoppelt. Im Bereich zwischen den Koppelstellen des Hebels an die Wanderweiterung bzw. die Stütze greift der Aktuator mit seiner Kolbenstange an. Bei diesem Mechanismus fluchten die Gelenksachsen des ersten und des zweiten Schwenklagers in der abgeklappten Stellung der Wanderweiterung miteinander. Diese Gelenkzuordnung bleibt so lange erhalten, bis die Wanderweiterung ihre aufgerichtete Stellung erreicht. Um die aufgerichtete Stellung zu sichern muss der Hydraulikzylinder weiter teleskopiert werden, so dass sich die Gelenksachse des zweiten Schwenklagers gegenüber der Gelenksachse des ersten Schwenklagers verstellt. Diese Mechanik hat den Nachteil, dass es aufgrund von Fertigungstoleranzen nur sehr aufwendig möglich ist, die beiden Gelenksachsen des ersten und des zweiten Schwenklagers zueinander fluchtend anzuordnen. Daher müssen in der Getriebeanordnung Ausgleichsmechanismen vorgesehen sein, um die Funktionalität zu gewährleisten. Beispielsweise können im Bereich der Gelenkpunkte Langlöcher oder dergleichen vorgesehen sein. Solche Langlöcher oder andere Ausgleichsmechanismen haben allerdings den Nachteil, dass sie zu einem instabilen Bewegungsablauf führen. Bei der aus der EP 2 730 459 A2 bekannten Anordnung überfährt die Getriebeanordnung eine Totpunktlage, bei der die Wanderweiterung aufgrund der Ausgleichsmechanismen zumindest in einem Teilbereich der Schwenkbewegung eine unkontrollierte Bewegung ausführt. Weiterhin bedingt die bekannte Anordnung einen hohen Teile-und Montageaufwand. Dokument US2008/041984A1 offenbart den Oberbegriff von Anspruch 1.

Es ist Aufgabe der Erfindung, einen Einfülltrichter der eingangs erwähnten Art bereitzustellen, mit der sich die Wanderweiterung auf einfache Weise kontrolliert und zuverlässig zwischen der Transportstellung und der Arbeitsstellung bewegen lässt.

Diese Aufgabe wird durch die kennzeichnenden Merkmale des Anspruchs 1 gelöst.

Erfindungsgemäß wird mithin unter Einbeziehung der Seitenwand und der Wanderweiterung ein stabil arbeitendes Gelenkssystem geschaffen, wobei der Aktuator, der Hebel und der Ausgleichshebel eine Gelenkkette bilden. Mit dieser Anordnung kann die Wanderweiterung zuverlässig zwischen einer Transportstellung und der Arbeitsstellung verstellt werden. Diese Gelenkkette lässt sich auch ohne Probleme verbauen, ohne dass aufwendige Anpassarbeiten erforderlich sind. Gemäß einer bevorzugten Ausgestaltungsvariante der Erfindung kann es vorgesehen sein, dass der Aktuator und der Hebel schwenkbar an das Wandelement angeschlossen sind, und dass der Aktuator an einem Arm des Hebels angekoppelt und der Ausgleichshebel an dem zweiten Arm des Hebels angeschlossen ist. Auf diese Weise wird eine Art Kniegelenk geschaffen, wobei über die Dimensionierung der Hebelarme die erforderlichen Stellkräfte in Bezug auf den Stellweg des Aktuators einfach ausgelegt werden können.

Ein erfindungsgemäßer Einfülltrichter kann dergestalt sein, dass die Gelenkpunkte des Ausgleichshebels eine erste Halbgerade und die Gelenkpunkte des Hebels eine zweite Halbgerade bilden, und dass die Halbgeraden in der Arbeitsstellung einen Winkel im Bereich zwischen 180° und 150 ° einschließen. Bei einem Winkel von 180° (gestreckte Lage) wird die Gewichtskraft der Wanderweiterung vollständig in die Gelenkpunkte abgetragen und der Aktuator ist kraftfrei gehalten. Ein solches System sichert sich damit selbsttätig. Nun ist es aufgrund von Fertigungstoleranzen nur schwer möglich die exakte Winkellage von 180° einzuhalten. Die Erfinder haben erkannt, dass bei üblichen Anwendungen von Gesteins-Zerkleinerungsanlagen bzw. Siebanlagen eine Winkellage im Bereich zwischen 180° bis 150 ° ausreichend ist, um mit der Verwendung von üblichen Aktuatoren eine kraftarme Stabilisierung der Wanderweiterung zu ermöglichen. Insbesondere beim Einsatz von Hydraulikzylindern als Aktuatoren hat sich auch eine Winkellage im Bereich zwischen 180° und 170° bewährt.

Die Erfinder haben weiterhin erkannt, dass auch eine Winkellage im Bereich zwischen 180° und 210° (überstreckte Lage) besondere Vorteile bietet. Ein solches System sichert sich selbsttätig, wobei die Aufrichtung der Wanderweiterung stets garantiert ist. Bei Winkellagen über 210° ist eine solche Selbstsicherung auch gewährleistet, jedoch klappt dann die Wanderweiterung gegenüber der Seitenwand wieder deutlich nach unten ab. Besonders vorteilhaft bei der Verwendung von Hydraulikzylindern sind in diesem Fall Winkellagen im Bereich zwischen 180° und 190 °.

Eine denkbare Erfindungsvariante ist derart, dass der Ausgleichshebel oder der Hebel in der Arbeitsstellung an einem Anschlag der Wanderweiterung oder des Wandelements anliegt. Damit kann auf einfache Weise eine reproduzierbare Auf Richt-Stellung der Wanderweiterung garantiert werden. Dem Anschlag kann auch beispielsweise ein Schaltelement zugeordnet sein, dass den Aktuator abschaltet, sobald der Anschlag kontaktiert ist.

Wenn vorgesehen ist, dass an der Seitenwand zwei Halter zueinander beabstandet angeordnet sind, dann kann der Aktuator gesichert zwischen den beiden Haltern angeordnet und an diesen schwenkbar gelagert werden. Dies hat insbesondere im rauen Baustellenbetrieb Vorteile. Die Halter schützen den empfindlichen Aktuator vor mechanischen Kontakt. Die beidseitige Lagerung des Aktuators hält ihn im Bereich seiner Schwenklagerung von Drehmomenten frei.

Weiterhin ist es denkbar, dass an der Wanderweiterung zwei Befestigungsabschnitte zueinander beabstandet angeordnet sind, und dass der Ausgleichshebel zwischen den beiden Befestigungsabschnitten angeordnet und an diesen schwenkbar gelagert ist. Dann ist auch der Ausgleichshebel geschützt untergebracht und drehmomentfrei gelagert.

Die Befestigungsabschnitte bzw. die Halter können auch als Versteifungsrippen ausgebildet und mit der Außenseite der Seitenwand oder der Wanderweiterung verbunden, beispielsweise verschweißt werden. Auf diese Weise lässt sich eine materialoptimierte Konstruktion für die Seitenwand bzw. die Wanderweiterung verwirklichen.

Eine besonders bevorzugte Erfindungsvariante ist dergestalt, dass an einer den Trichterraum begrenzenden Rückwand ein aufrichtbares Wandelement anscharniert ist, wobei das Wandelement im aufgerichteten Zustand eine geringere Höhe als die aufgerichteten Wanderweiterungen aufweist. Dann wird im Bereich der Rückwand ein, für einen Radlader gut zugänglicher Befüllzugang geboten.

Die Erfindung wird im Folgenden anhand von in den Zeichnungen dargestellten Ausführungsbeispielen näher erläutert.

Es zeigen:
- Figur 1:: in perspektivischer Seitenansicht einen Einfülltrichter,
- Figur 2:: den Einfülltrichter gemäß Figur 1 in seitliche Ansicht von vorne,
- Figur 3:: den Einfülltrichter gemäß den Figuren 1 und 2 in einer veränderten Betriebsstellung,
- Figur 4 - 7:: eine Figurenfolge in der ein Bewegungsablauf eines Teils des Einfülltrichters gemäß den Figuren 1 - 3 dargestellt ist und
- Figuren 8 - 9:: zwei Varianten zu der Figurenfolge gemäß den Figuren 4 - 7.

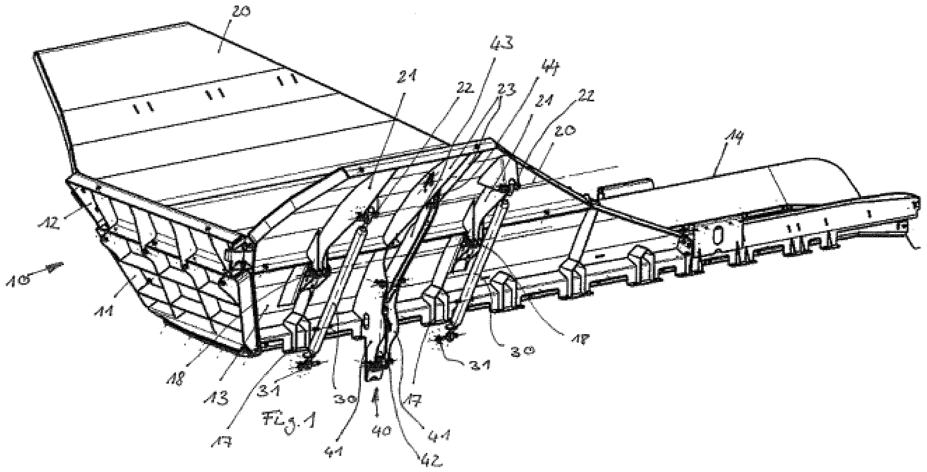

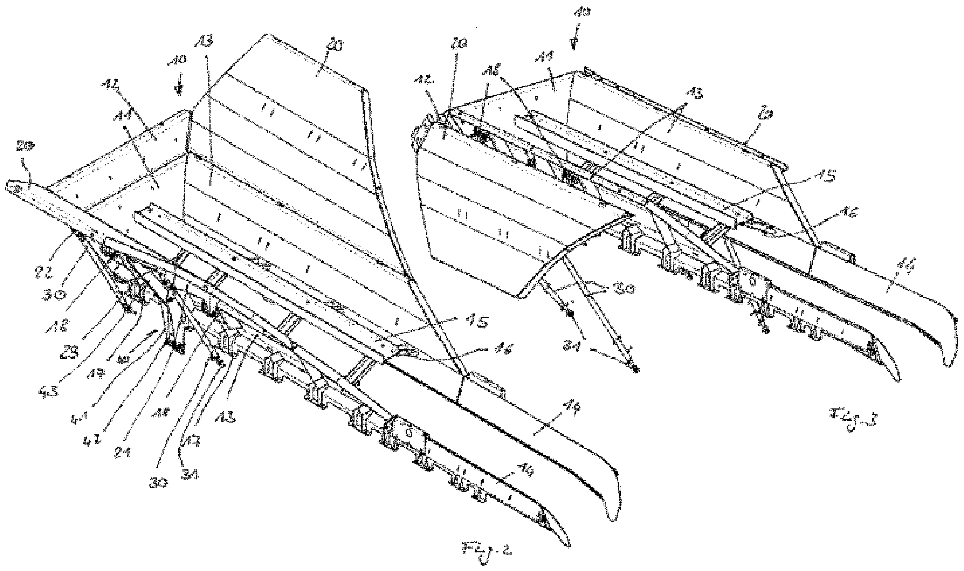

In den Figuren 1-3 ist ein Einfülltrichter 10 für eine Gesteins-Zerkleinerungsanlage oder eine Siebanlage dargestellt. Der Einfülltrichter 10 weist einen Trichterraum auf, der rückseitig von einer Rückwand 11 begrenzt ist. An die Rückwand 11 ist ein Wandelement 12 anscharniert. Dabei ist die Scharnierachse so gelegt, dass das Wandelement 12 nach unten abgeklappt werden kann, wie dies Figur 3 zeigt. Seitlich schließen an die Rückwand 11 Seitenwände 13 an. Die Seitenwände 13 und die Rückwand 11 sind zueinander so angestellt, dass sich der nach oben hin erweiternde Trichterraum ergibt. Gegenüberliegend der Rückwand 11 ist an die Seitenwände 13 jeweils ein Ansatz 14 angeschlossen. Im Bodenbereich des Trichterraums ist, wie Figur 2 erkennen lässt ein Entlastungselement 15 vorgesehen, das seitlich über Profilabschnitte 16 zu den Seitenwänden 13 hin abgestrebt ist. Unter dem Entlastungselement 15 verläuft ein (nicht dargestelltes) endlos umlaufendes Förderband. Dieses Förderband ist im Bereich der Rückwand 11 umgelenkt. Das Förderband erstreckt sich aus dem Trichterraum heraus und unter den Ansätzen 14 hindurch.

Wie Figur 1 erkennen lässt, sind an die Seitenwände 13 Wanderweiterungen 20 anscharniert. Die Wanderweiterungen 20 können dabei als Wandelemente von einem Blechzuschnitt gebildet sein. Auf der Außenseite der Wanderweiterung 20 sind Stützelemente 21 befestigt, die vorliegend als Stützrippen ausgebildet sind. Die Stützelemente 21 können auf der Außenseite der Wanderweiterung 20 festgeschweißt sein. Zur Vereinfachung des baulichen Aufwandes, weisen die Stützelemente 21 gleichzeitig Lagerstellen zur Bildung von Lagern 18 auf. Mittels der Lager 18 sind die Wanderweiterungen 20 an die Seitenwände 13 angekoppelt. Zu diesem Zweck weist die Seitenwand 13 an einem Lagerbock ein weiteres Scharnierteil auf, das das Lager 18 komplettiert. An dem Stützelement 21 ist weiterhin ein Sicherungselement 30 befestigt. Das Sicherungselement 30 kann, wie vorliegend als Stützstrebe ausgeführt sein. Zur Anbindung des Sicherungselements 30 weist das Stützelement 21 eine Koppelstelle 22 auf. An dem der Koppelstelle 22 abgewandten Ende weist das Sicherungselement 30 ein Koppelende 31 auf. Dieses Koppelende 31 kann in eine Befestigungsstelle eingestellt werden, die beispielsweise an der Seitenwand 13 angeordnet ist. Die Funktion des Sicherungselements 30 wird später erläutert.

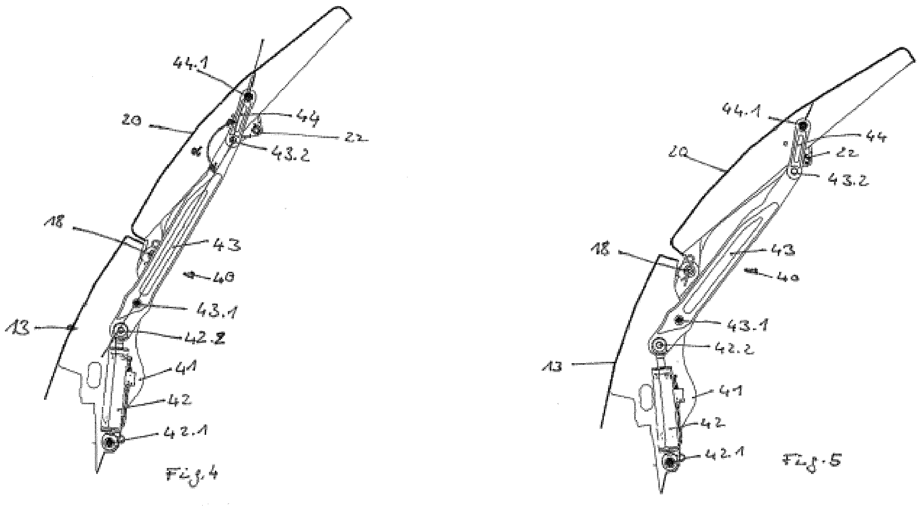

An der Außenseite des Einfülltrichters 10 sind im Bereich der Seitenwände 13 weiterhin Aufrichthilfen 40 montiert. Die Aufrichthilfen 40 umfassen zwei Halter 41, die auf der Außenseite der Seitenwand 13 festgemacht, beispielsweise angeschweißt sind. Dabei sind die Halter 41 zueinander beabstandet angeordnet. Zwischen den Haltern 41 ist ein Aktuator 42 geschützt untergebracht. Der Aktuator 42 kann, wie vorliegend als Hydraulikzylinder ausgeführt sein. Denkbar ist jedoch auch eine andere Ausgestaltung eines Aktivators 42, beispielsweise ein sonstiger Linearantrieb oder ein motorischer Rotationsantrieb. In den Figuren 4-7 ist der Aufbau der Aufrichthilfe 40 deutlicher erkennbar, weshalb nachstehend auf diese Figuren Bezug genommen wird. Wie Figur 4 zeigt, ist der Aktuator 42 einseitig an die beiden Halter 41 schwenkbar angekoppelt. Zu diesem Zweck weisen die Halter 41 zueinander fluchtende Lagerstellen auf, die mit einem Gelenkpunkt 42.1 des Aktuator 42 zur Bildung einer Schwenklagerung zusammenarbeiten. Das dem Gelenkpunkt 42.1 abgekehrt Ende des Aktuator ist über ein Schwenklager an einen Hebel 43 angekoppelt. Dabei wird der Gelenkpunkt 42.2 gebildet. Der Hebel 43 seinerseits ist zumindest an einen, vorzugsweise gleichzeitig an beide Halter 41 schwenkbar über den Gelenkpunkt 43.1 angekoppelt. Das freie Ende des Hebels 43 ist an einen Ausgleichshebel 44 über einen Gelenkpunkt 43.2 im Bereich einer Schwenklagerung angekoppelt. Der Ausgleichshebel 44 seinerseits bildet im Bereich eines Gelenkspunkts 44.1 eine Schwenklagerung mit der Wanderweiterung 20. Wie Figur 1 erkennen lässt, sind zu diesem Zweck an der Außenseite der Wanderweiterung 20 zwei Befestigungsabschnitte 23 befestigt. Die Befestigungsabschnitte 23 können, wie vorliegend als Versteifungsrippen ausgebildet und mit der Außenseite der Wanderweiterung 20 verbunden, vorzugsweise verschweißt sein. Im Bereich zwischen den beiden Befestigungsabschnitten 23 ist der Ausgleichshebel 44 geschützt untergebracht.

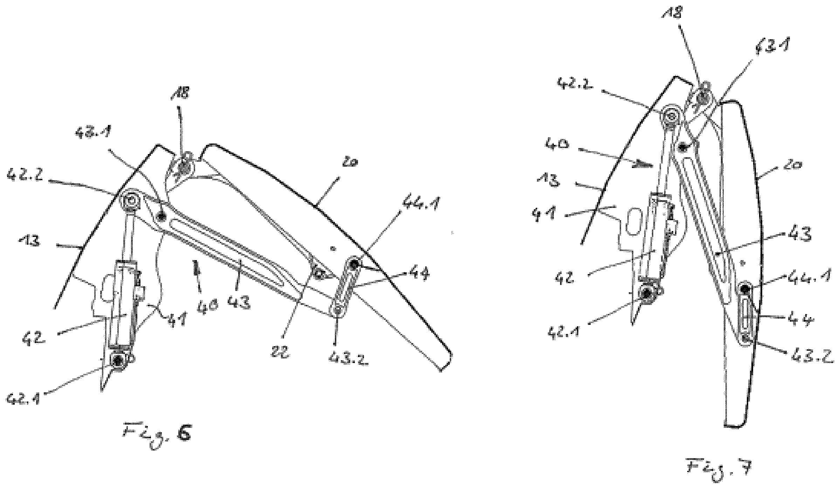

Nachfolgend wird die Funktion der Aufrichthilfe 40 näher erläutert. Dabei wird unter Bezugnahme auf die Figuren 4-7 zunächst das Abklappen der Wanderweiterung 20 von der in Figur 4 gezeigten Arbeitsstellung in die in Figur 7 gezeigte Transportstellung erläutert. In der, in Figur 4 gezeigten Arbeitsstellung steht der Aktuator 42 in seiner eingezogenen Stellung. Bei dem verwendeten Hydraulikzylinder ist mithin die Kolbenstange eingefahren. Wenn nun der Aktuator 42 betätigt wird, so fährt er kontinuierlich in seine Ausfahrstellung. Da der Gelenkpunkt 42.2 von dem Gelenkpunkt 43.1 beabstandet ist, kann der Aktuator 42 ein Drehmoment in den Hebel 43 einbringen. Über dieses Drehmoment und das durch die Gewichtskraft der Wanderweiterung induzierte Gegen-Drehmoment klappt die Wanderweiterung 20 kontinuierlich und gesichert in die Transportstellung ab. Dabei verschwenken der Hebel 43 und der Ausgleichshebel 44 kontinuierlich. Wie die Figurenfolge zeigt, verbleibt der Aktuator 42 während des Bewegungsablauf stets gesichert zwischen den beiden Haltern 41.

Um nun die Wanderweiterung 20 von der in Figur 7 gezeigten Transportstellung in die in Figur 4 gezeigte Arbeitsstellung zu bewegen, wird die Figurenfolge in umgekehrter Reihenfolge durchlaufen. Dabei wird ausgehend von der in Figur 7 gezeigten ausgefahrenen Stellung des Aktuators 42 dieser eingezogen. Bei dem verwendeten Hydraulikzylinder fährt die Kolbenstange in den Zylinder ein. Sobald die Wanderweiterung 20 die in Figur 4 gezeigte Stellung erreicht hat, wird der Hydraulikzylinder abgeschaltet. Um eine definierte Stellung der Wanderweiterung 20 zu erhalten, kann beispielsweise vorgesehen sein, dass der Hebel 43 oder der Ausgleichshebel 44 gegen einen (nicht gezeigten) Anschlag fährt. In der aufgerichteten Stellung gemäß Figur 4 schließen der Ausgleichshebel 44 und der Hebel 43 einen Winkel α ein, der vorzugsweise im Bereich zwischen 180° und 150°, besonders bevorzugt zwischen 180° und 170° liegt. Bei einer solchen Winkelstellung sind die Gelenkpunkte 44.1,43.2 und 43.1 einander so zugeordnet, dass in Betätigungsrichtung des Aktuators 42 nur eine geringe Kraft einwirkt. Entsprechend muss im Aktuator 42 nur eine geringe Haltekraft bereitgestellt werden um die Position der Wanderweiterung 20 zu sichern. Bei den vorgeschlagenen Winkelmaßen ist dies mit gängigen Hydraulikzylindern ohne Probleme zu erreichen. Zur Sicherung der Position der Wanderweiterung 20 können darüber hinaus auch die Sicherungselemente 30 verwendet werden. In der aufgerichteten Position der Wanderweiterung 20 werden die, an den Stützelementen 21 schwenkbar befestigten Sicherungselemente 30 in Richtung auf die Koppelstellen 17 verschwenkt und hier, beispielsweise mit einem Sicherungsbolzen festgelegt. Im Bereich der Seitenwände 13 sind diese Koppelstellen 17 für einen Maschinenführer gut zugänglich. An dieser Stelle sei nochmals darauf verwiesen, dass die Sicherungselemente 30 eine optionale Maßnahme darstellen können. Die Aufrichthilfe 40 gemäß der Erfindung ist insbesondere geeignet ein selbsttätiges Halten der Wanderweiterung 20 zu garantieren.

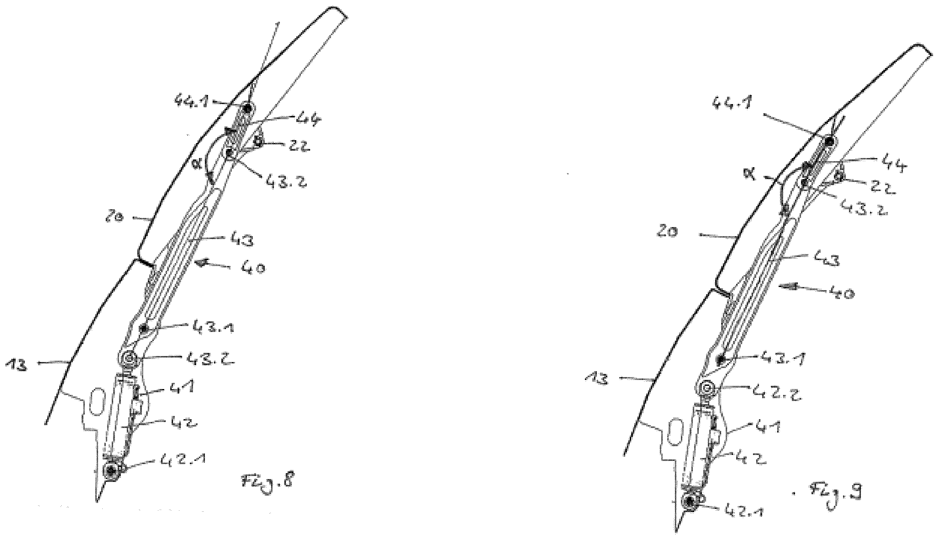

In den Figuren 8 und 9 sind zwei weitere Varianten dargestellt. Dabei entsprechen die Aufrichthilfen 40 gemäß diesen beiden Varianten vollständig konstruktiv der voreschriebenen Ausführung. Lediglich die Anordnung der Gelenkpunkte 44.1,43.2 und 43.1 ist verändert. Insofern kann im wesentlichen auf die vorstehenden Ausführungen Bezug genommen und es können nachstehend nur die Änderungen erläutert werden. Gemäß Figur 8 sind die Gelenkpunkte 44.1 43.2 und 43.1 auf einer Linie angeordnet. Entsprechend beträgt der Winkel α gleich 180°.

Entsprechend dem Ausführungsbeispiel nach Figur 9 kann der Winkel α zwischen dem Ausgleichshebel 44 und dem Hebel 43 auch >180° sein. Vorliegend ist der Winkel im Bereich zwischen 180° und 210°, besonders bevorzugt zwischen 180° und 190° gewählt. Insofern ergibt sich eine überstreckte Lage, die die Wanderweiterung 20 selbstständig in der aufgerichteten Lage hält. Auch bei den Ausführungsbeispielen nach den Figuren 8 und 9 kann wenigstens ein Sicherungselement 30 verbaut sein.

## Patentansprüche

1. Einfülltrichter, insbesondere für eine Gesteins-Zerkleinerungsanlage, Siebanlage oder dergleichen, mit einer Seitenwand (13), die einen Trichterraum begrenzt,
wobei an die Seitenwand (13) eine Wanderweiterung (20) schwenkbar angekoppelt ist,
wobei der Wanderweiterung (20) eine Aufrichthilfe (40) zugeordnet ist, um die Wanderweiterung (20) zwischen einer abgeklappten Transportstellung und einer aufgerichteten Arbeitsstellung zu bewegen,
wobei die Aufrichthilfe (40) einen Aktuator (42) aufweist, der an einem schwenkbar gelagerten Hebel (43) angekoppelt ist,
wobei der Hebel (43) schwenkbar an einen Ausgleichshebel (44) angekoppelt ist,
und wobei der Ausgleichshebel (44) schwenkbar an die Wanderweiterung (20) angekoppelt ist,
**dadurch gekennzeichnet,**
**dass** die Aufrichthilfe (40) zwei Halter umfasst, die auf der Außenseite der Seitenwand (13) festgemacht sind,
**dass** die Halter (41) zueinander beabstandet angeordnet sind,
**dass** der Aktuator (42) zwischen den Haltern (41) untergebracht und einseitig an den beiden Haltern (41) schwenkbar angekoppelt ist,
und **dass** der Hebel (43) zumindest an einem der beiden Halter (41) schwenkbar über einen Gelenkpunkt (43.1) angekoppelt ist.

2. Einfülltrichter nach Anspruch 1, **dadurch gekennzeichnet, dass** der Aktuator (42) und/oder der Hebel (43) schwenkbar an vorzugsweise die Seitenwand (13) oder ein sonstiges benachbartes Maschinenteil angeschlossen sind, und dass der Aktuator (42) an einem Arm des Hebels (43) angekoppelt und der Ausgleichshebel (44) an dem zweiten Arm des Hebels (43) angeschlossen sind.

3. Einfülltrichter nach Anspruch 1 oder 2, **dadurch gekennzeichnet, dass** die Gelenkpunkte (44.1,43.2) des Ausgleichshebels (44) eine erste Halbgerade und die Gelenkpunkte (43.2,43.1) des Hebels (43) eine zweite Halbgerade bilden, und dass die Halbgeraden in der Arbeitsstellung einen Winkel im Bereich zwischen 180° und 150 °, vorzugsweise im Bereich zwischen 180° und 170 ° einschließen.

4. Einfülltrichter nach einem der Ansprüche 1-3 **dadurch gekennzeichnet, dass** die Gelenkpunkte (44.1,43.2) des Ausgleichshebels (44) eine erste Halbgerade und die Gelenkpunkte (43.2,43.1) des Hebels (43) eine zweite Halbgerade bilden, und dass die Halbgeraden in der Arbeitsstellung einen Winkel größer als 180°, vorzugsweise im Bereich zwischen 180° und 210°, besonders bevorzugt im Bereich zwischen 180° und 190 ° einschließen.

5. Einfülltrichter nach einem der Ansprüche 1-4, **dadurch gekennzeichnet, dass** der Ausgleichshebel (44) oder der Hebel (43) in der Arbeitsstellung an einem Anschlag der Wanderweiterung (20) oder der Seitenwand (13) anliegt.

6. Einfülltrichter nach einem der Ansprüche 1-5, **dadurch gekennzeichnet, dass** an der Seitenwand (13) oder einem sonstigen benachbarten Maschinenteil zwei Halter (41) zueinander beabstandet angeordnet sind, und dass der Aktuator (42) zwischen den beiden Haltern (41) angeordnet und an diesen schwenkbar gelagert ist.

7. Einfülltrichter nach einem der Ansprüche 1-6, **dadurch gekennzeichnet, dass** an der Wanderweiterung (20) zwei Befestigungsabschnitte (23) zueinander beabstandet angeordnet sind, und dass der Ausgleichshebel (44) zwischen den beiden Befestigungsabschnitten (23) angeordnet und an diesen schwenkbar gelagert ist.

8. Einfülltrichter nach Anspruch 6 oder Anspruch 7, **dadurch gekennzeichnet, dass** die Befestigungsabschnitte (23) und/oder die Halter (41) als Versteifungsrippen ausgebildet und mit der Außenseite der Seitenwand (13) einem sonstigen benachbarten Maschinenteil oder der Wanderweiterung (20) verbunden sind.

9. Einfülltrichter nach einem der Ansprüche 1-8, **dadurch gekennzeichnet, dass** an der Wanderweiterung (20) ein Sicherungselement (30) angebracht ist, das ein Koppelende (31) aufweist, und dass das Koppelende (31) in der Arbeitsstellung einer Kupplung der Seitenwand (13) oder einem sonstigen benachbarten Maschinenteil, zur Bildung einer Stützverbindung zwischen der Wanderweiterung (20) und dem Wandelement (13), zuordenbar ist.

10. Einfülltrichter nach einem der Ansprüche 1-9, **dadurch gekennzeichnet, dass** er zwei gegenüberliegende Seitenwände (13) aufweist, an die jeweils eine Wanderweiterung (20) angeschlossen ist.

11. Einfülltrichter nach einem der Ansprüche 1-10, **dadurch gekennzeichnet, dass** an einer den Trichterraum begrenzenden Rückwand (11) ein aufrichtbares Wandelement (12) anscharniert ist, wobei das Wandelement (12) im aufgerichteten Zustand eine geringere Höhe als die aufgerichtete Wanderweiterung (20) aufweist.

## Claims

1. Hopper, in particular for a rock crushing plant, screening plant or the like, having a side wall (13) which delimits a hopper space,
wherein a wall extension (20) is pivotably coupled to the side wall (13),
wherein an erecting aid (40) is associated with the wall extension (20) in order to move the wall extension (20) between a folded-down transport position and an erected working position,
wherein the erection aid (40) comprises an actuator (42) coupled to a pivotally mounted lever (43),
wherein the lever (43) is pivotally coupled to a balance lever (44),
and wherein the balance lever (44) is pivotally coupled to the wall extension (20), **characterized in**
**in that** the erecting aid (40) comprises two holders which are fixed to the outside of the side wall (13),
that the holders (41) are arranged spaced apart from each other,
**in that** the actuator (42) is accommodated between the holders (41) and is coupled pivotably on one side to the two holders (41)
and that the lever (43) is pivotally coupled to at least one of the holders (41) via a hinge point (43.1).

2. Hopper according to claim 1, **characterized in that** the actuator (42) and/or the lever (43) are pivotally coupled to preferably the side wall (13) or other adjacent machine part, and that the actuator (42) is coupled to one arm of the lever (43) and the balancing lever (44) is coupled to the second arm of the lever (43).

3. Hopper according to claim 1 or 2, **characterized in that** the hinge points (44.1,43.2) of the balancing lever (44) form a first half line and the hinge points (43.2,43.1) of the lever (43) form a second half line, and that the half lines in the working position enclose an angle in the range between 180° and 150 °, preferably in the range between 180° and 170 °.

4. Hopper according to one of claims 1-3, **characterized in that** the hinge points (44.1, 43.2) of the balancing lever (44) form a first half line and the hinge points (43.2, 43.1) of the lever (43) form a second half line, and **in that** the half lines in the working position enclose an angle greater than 180°, preferably in the range between 180° and 210°, particularly preferably in the range between 180° and 190°.

5. Hopper according to one of the claims 1-4, **characterized in that** the balancing lever (44) or the lever (43) in the working position abuts against a stop of the wall extension (20) or the side wall (13).

6. Hopper according to one of the claims 1-5, **characterized in that** two holders (41) are arranged at a distance from one another on the side wall (13) or another adjacent machine part, and **in that** the actuator (42) is arranged between the two holders (41) and is pivotably mounted thereon.

7. Hopper according to one of the claims 1-6, **characterized in that** two fastening sections (23) are arranged at a distance from one another on the wall extension (20), and **in that** the balancing lever (44) is arranged between the two fastening sections (23) and is pivotably mounted thereon.

8. Hopper according to claim 6 or claim 7, **characterized in that** the fastening sections (23) and/or the holders (41) are designed as stiffening ribs and are connected to the outside of the side wall (13) of another adjacent machine part or the wall extension (20).

9. Hopper according to one of the claims 1-8, **characterized in that** a securing element (30) is attached to the wall extension (20), which has a coupling end (31), and **in that** the coupling end (31), in the working position, can be associated with a coupling of the side wall (13) or another adjacent machine part, for forming a supporting connection between the wall extension (20) and the wall element (13).

10. Hopper according to any one of claims 1-9, **characterized in that** it comprises two opposite side walls (13), to each of which a wall extension (20) is connected.

11. Hopper according to one of the claims 1-10, **characterized in that** an erectable wall element (12) is hinged to a rear wall (11) bounding the hopper space, the wall element (12) having a lower height in the erected state than the erected wall extension (20).

## Revendications

1. Trémie de remplissage, en particulier pour une installation de concassage de roches, une installation de criblage ou similaire, avec une paroi latérale (13) qui délimite un espace de trémie,
une extension paroi (20) étant couplée de manière pivotante à la paroi latérale (13), une aide au redressement (40) étant associée à l'extension mobile (20) pour déplacer l'extension paroi (20) entre une position de transport rabattue et une position de travail redressée,
l'aide au redressement (40) présentant un actionneur (42) qui est couplé à un levier (43) logé de manière pivotante,
le levier (43) étant couplé de manière pivotante à un levier de compensation (44), et le levier d'équilibrage (44) étant couplé de manière pivotante à l'extension paroi (20),
**caractérisé en ce que**
que l'aide au redressement (40) comprend deux supports qui sont fixés sur le côté extérieur de la paroi latérale (13),
que les supports (41) sont disposés à une certaine distance l'un de l'autre,
**en ce que** l'actionneur (42) est logé entre les supports (41) et est couplé de manière pivotante d'un côté aux deux supports (41),
et **en ce que** le levier (43) est couplé de manière pivotante à au moins l'un des supports (41) par l'intermédiaire d'un point d'articulation (43.1).

2. Trémie de remplissage selon la revendication 1, **caractérisée en ce que** l'actionneur (42) et/ou le levier (43) sont raccordés de manière pivotante, de préférence à la paroi latérale (13) ou à une autre partie de machine adjacente, et **en ce que** l'actionneur (42) est couplé à un bras du levier (43) et le levier d'équilibrage (44) est raccordé au deuxième bras du levier (43).

3. Trémie de remplissage selon la revendication 1 ou 2, **caractérisée en ce que** les points d'articulation (44.1, 43.2) du levier de compensation (44) forment une première demi-droite et les points d'articulation (43.2, 43.1) du levier (43) forment une deuxième demi-droite, et **en ce que** les demi-droites forment, en position de travail, un angle compris entre 180° et 150 °, de préférence entre 180° et 170 °.

4. Trémie de remplissage selon l'une des revendications 1 à 3, **caractérisée en ce que** les points d'articulation (44.1, 43.2) du levier d'équilibrage (44) forment une première demi-droite et les points d'articulation (43.2, 43.1) du levier (43) forment une deuxième demi-droite, et **en ce que** les demi-droites forment, en position de travail, un angle supérieur à 180°, de préférence compris entre 180° et 210°, de manière particulièrement préférée entre 180° et 190°.

5. Trémie de remplissage selon l'une des revendications 1 à 4, **caractérisée en ce que** le levier d'équilibrage (44) ou le levier (43) est en contact avec une butée de l'extension paroi (20) ou de la paroi latérale (13) dans la position de travail.

6. Trémie de remplissage selon l'une des revendications 1 à 5, **caractérisée en ce que** deux supports (41) sont disposés à distance l'un de l'autre sur la paroi latérale (13) ou sur une autre partie voisine de la machine, et **en ce que** l'actionneur (42) est disposé entre les deux supports (41) et est monté pivotant sur ceux-ci.

7. Trémie de remplissage selon l'une des revendications 1 à 6, **caractérisée en ce que** deux sections de fixation (23) sont disposées à distance l'une de l'autre sur l'extension paroi (20), et **en ce que** le levier de compensation (44) est disposé entre les deux sections de fixation (23) et est monté pivotant sur celles-ci.

8. Trémie de remplissage selon la revendication 6 ou la revendication 7, **caractérisée en ce que** les sections de fixation (23) et/ou les supports (41) sont conçus comme des nervures de renforcement et sont reliés à la face extérieure de la paroi latérale (13), à une autre pièce de machine voisine ou à l'extension paroi (20).

9. Trémie de remplissage selon l'une des revendications 1 à 8, **caractérisée en ce qu'**un élément de sécurité (30) est monté sur l'extension paroi (20), lequel présente une extrémité d'accouplement (31), et **en ce que** l'extrémité d'accouplement (31) peut être associée, dans la position de travail, à un accouplement de la paroi latérale (13) ou à une autre partie de machine voisine, pour former une liaison de soutien entre l'extension paroi (20) et l'élément de paroi (13).

10. Trémie d'alimentation selon l'une des revendications 1 à 9, **caractérisée en ce qu'**elle présente deux parois latérales (13) opposées auxquelles est raccordée une extension paroi (20).

11. Trémie de remplissage selon l'une des revendications 1-10, **caractérisée en ce qu'**un élément de paroi (12) pouvant être redressé est articulé sur une paroi arrière (11) délimitant l'espace de la trémie, l'élément de paroi (12) présentant, à l'état redressé, une hauteur inférieure à l'extension paroi (20) redressée.
